# EUROPEAN PATENT APPLICATION

(11) **EP 2 631 807 A1**
(43) Date of publication of application: **28.08.2013**
(21) Application number: 11833991.0
(22) Date of filing: 23.08.2011
(51) Int. Cl.: G06F 13/00

(54) **CONFIGURATION SYSTEM, SERVER, TERMINAL APPARATUS, CONFIGURATION METHOD, AND CONFIGURATION PROGRAM**

(30) Priority: 21.10.2010 JP 2010236461
(71) Applicant: NEC Corporation, Tokyo 108-8001 (JP)
(72) Inventor: NEBAYASHI, Hideaki, Tokyo 108-8001 (JP)
(74) Representative: Betten & Resch
(86) International application number: PCT/JP2011/004670
(87) International publication number: WO 2012/053145

(57) **Abstract**

A setting device to be set, a terminal device, and a server connected to each of the setting device and the terminal device are provided. A terminal device of a setting system that performs a setting of the setting device acquires setting information, which is information for setting the setting device, by reading from the setting device and transmits the acquired setting information to the server. A server receives the setting information transmitted from the setting information transmission unit. The server selects a setting device to be set on the basis of the setting information and transmits a setting execution instruction to the selected setting device. The setting device performs a setting of itself according to the instruction of the setting instruction unit.

## Description

### TECHNICAL FIELD

The present invention relates to setting a target device on the basis of the setting information.

### BACKGROUND ART

An example of a system, which is configured to include a plurality of computers and sets a target device on the basis of the setting information, is disclosed in Patent Document 1.

FIG. 16 is a diagram equivalent to FIG. 1 in Patent Document 1. The setting system disclosed in Patent Document 1 has a mobile phone 4, an authentication server 11, a DB server 12, an authentication plate 21, an article plate 22, and a two-dimensional code 23 (23a, 23b).

The setting system having such a configuration, which is disclosed in Patent Document 1, operates as follows:

The authentication server 11 determines whether the received data from the mobile phone 4 is two-dimensional code data of the authentication plate 21 or two-dimensional code data of the article plate 22. As a result of the determination, when the received data from the mobile phone 4 is two-dimensional code data of the authentication plate 21, the authentication server 11 stores terminal-specific information and job execution location identification data of the two-dimensional code data in an accessible table. On the other hand, when the data received from the mobile phone 4 is two-dimensional code data of the article plate 22, the authentication server 11 performs a search regarding whether or not terminal-specific information of the two-dimensional code data is present in the accessible table. In addition, the authentication server 11 transmits screen information indicating the start of a job to a communication terminal when the terminal-specific information of the two-dimensional code data is present, and transmits screen information indicating "inaccessible" to the communication terminal when the terminal-specific information of the two-dimensional code data is not present.

In addition, another example of the setting system is disclosed in Patent Document 2.

FIG. 17 is a diagram equivalent to FIG. 1 in Patent Document 2. The setting system disclosed in Patent Document 2 has a mobile phone (communication terminal) 4, an article management server 11, a PC 12, a printer 13, an authentication plate (authentication code medium) 21, an article plate (article code display medium) 22, a checking plate (checking code medium) 23, and a two-dimensional code 24 (24a to 24c).

The setting system having such a configuration, which is disclosed in Patent Document 2, operates as follows:

The article code display medium 22 is provided for each article, such as POS terminals, counters, and gondolas used in stores. An article management code including article identification information unique to the article is displayed on the article code display medium 22. In addition, the setting system includes the communication terminal 4. The communication terminal 4 has a code reading unit capable of reading the article management code displayed on the article code display medium 22. In addition, the article management server 11 that manages the information of an article, which is stored in each store, is provided on a network connectable through the communication terminal 4. The article management server 11 manages the location of an article, which is used in a store, on the basis of the article management code of the article code display medium 22 read by the communication terminal 4.

### RELATED DOCUMENT

### PATENT DOCUMENT

[Patent Document 1] Japanese Unexamined Patent Publication No. 2006-185110 (page 1, FIG. 1)
[Patent Document 2] Japanese Unexamined Patent Publication No. 2006-285650 (page 1, FIG. 1)

### DISCLOSURE OF THE INVENTION

By using the technique described above, a setting using a code reading function of a terminal becomes possible. However, there is a plurality of following problems in the above-described technique.

The first problem is that a setting can be performed only for a terminal that has read a code and settings of other terminals or devices cannot be performed.

The reason is that only the authentication of a terminal that has read a code is performed and a setting regarding the access to the terminal that has read the code is performed according to the authentication result.

The second problem is that settings of a plurality of terminals or devices cannot be performed.

The reason is the same as the reason for the above-described first problem, and is that only the authentication of a terminal that has read a code is performed and a setting regarding the access to the terminal that has read the code is performed according to the authentication result.

Therefore, it is an object of the present invention to provide a setting system, a server, a terminal device, a setting method, and a setting program which make it possible to perform settings for terminals or devices other than a terminal that has read a code.

According to a first aspect of the present invention, there is provided a setting system that performs a setting of a setting device and that includes: a setting device to be set; a terminal device; and a server connected to each of the setting device and the terminal device. The terminal device includes a reading unit that acquires setting information, which is information for setting the setting device, by reading the setting information from the setting device and a setting information transmission unit that transmits the acquired setting information to the server. The server includes a setting information receiving unit that receives the setting information transmitted from the setting information transmission unit, and a setting instruction unit that selects the setting device to be set on the basis of the setting information and transmits a setting execution instruction to the selected setting device. The setting device includes a setting unit that performs a setting of itself according to the instruction of the setting instruction unit.

According to a second aspect of the present invention, there is provided a server connected to each of a setting device to be set and a terminal device. The server includes: a setting information receiving unit that receives setting information, which is read from the setting device by the terminal device and is information for setting the setting device; a setting instruction unit that selects the setting device to be set on the basis of the setting information and transmits a setting execution instruction to the selected setting device; a display unit that presents information to a user; and a setting situation checking unit that receives information indicating a situation after the setting, as a setting situation from the setting device, which has performed a setting according to the instruction, and displays the received setting situation on the display unit.

According to a third aspect of the present invention, there is provided a terminal device connected to a server connected to a setting device to be set. The terminal device includes: a reading unit that acquires setting information, which is information for setting the setting device, by reading the setting information from the setting device; a setting information transmission unit that transmits the acquired setting information to the server; a display unit that presents information to a user; and a setting situation receiving unit that receives information indicating a situation after the setting of the setting device that has performed a setting according to a setting instruction from the server on the basis of the setting information, as a setting situation from the server, and displays the received setting situation on the display unit.

According to a fourth aspect of the present invention, there is provided a setting method of a setting device performed by a system including a setting device to be set, a terminal device, and a server connected to each of the setting device and the terminal device. The setting method includes: a reading step in which the terminal device acquires setting information, which is information for setting the setting device, by reading the setting information from the setting device; a setting information transmission step in which the terminal device transmits the read setting information to the server; a setting information receiving step in which the server receives the setting information transmitted from the terminal device in the setting information transmission step; a setting instruction step in which the server selects the setting device to be set on the basis of the setting information and transmits a setting execution instruction to the selected setting device; and a setting step in which the setting device performs a setting of itself according to the instruction in the setting instruction step.

According to a fifth aspect of the present invention, there is provided a setting program of a setting device installed in a server connected to each of a setting device to be set and a terminal device. The setting program causes a computer to function as a server including: a setting information receiving unit that receives setting information, which is read from the setting device by the terminal device and is information for setting the setting device, from the terminal device; a setting instruction unit that selects the setting device to be set on the basis of the setting information and transmits a setting execution instruction to the selected setting device; a display unit that presents information to a user; and a setting situation checking unit that receives information indicating a situation after the setting, as a setting situation from the setting device, which has performed a setting according to the instruction, and displays the received setting situation on the display unit.

According to the present invention, it is possible to set terminals or devices other than a terminal that has read a code.

This is because a mobile terminal reads setting information attached to a setting device, the mobile terminal transmits the setting information to a server, the server transmits a setting instruction to the setting device using the setting information read by the mobile terminal, and the setting device performs a setting according to the setting instruction transmitted from the server.

### BRIEF DESCRIPTION OF THE DRAWINGS

The above-described object and other objects, features, and advantages will become more apparent by the preferred embodiments described below and the following accompanying drawings.

FIG. 1 is a block diagram showing the basic configuration of a first embodiment.
FIG. 2 is a flow diagram showing the overall operation of the first embodiment.
FIG. 3 is a flow diagram showing the operation of the first or second embodiment.
FIG. 4 is a flow diagram showing the operation of the first or second embodiment.
FIG. 5 is a flow diagram showing the operation of the first or second embodiment.
FIG. 6 is a flow diagram showing the operation of the first embodiment.
FIG. 7 is a block diagram showing the basic configuration of a second embodiment.
FIG. 8 is a flow diagram showing the operation of the second embodiment.
FIG. 9 is a flow diagram showing the operation of the second embodiment.
FIG. 10 is a block diagram showing the basic configuration of a first example which is an example of the first embodiment.
FIG. 11 is a block diagram showing the basic configuration of a second example which is an example of the second embodiment.
FIG. 12 is a diagram (1/3) showing a specific example of the operation of the first or second embodiment.
FIG. 13 is a diagram (2/3) showing a specific example of the operation of the first or second embodiment.
FIG. 14 is a diagram (3/3) showing a specific example of the operation of the first or second embodiment.
FIG. 15 is a block diagram illustrating a third example which is a modification of the first or second embodiment.

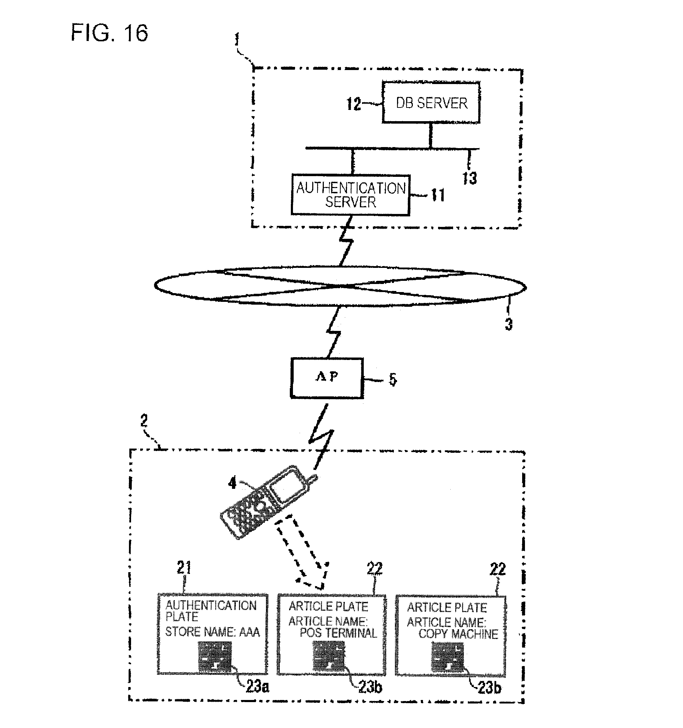

FIG. 16 is a diagram showing an example of a known setting system.

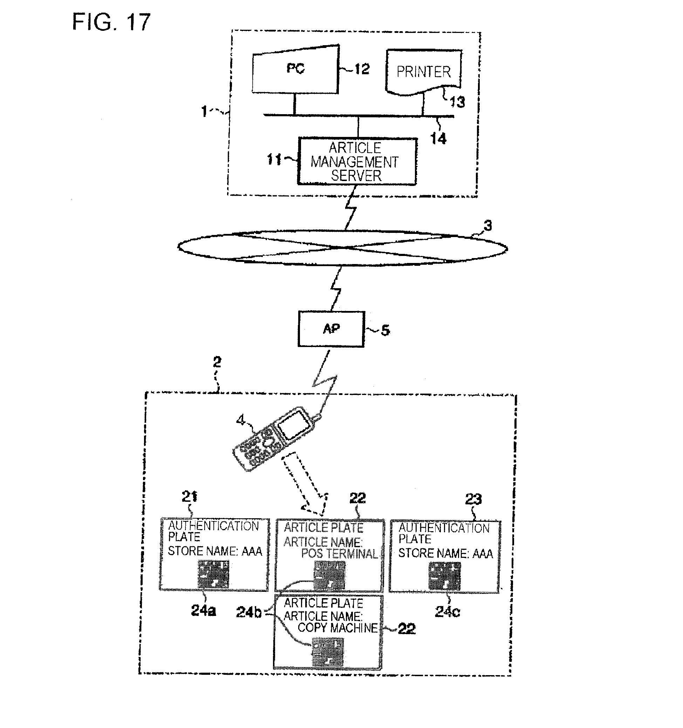

FIG. 17 is a diagram showing an example of a known setting system.

### DESCRIPTION OF EMBODIMENTS

Next, a first embodiment of the present invention will be described in detail with reference to the drawings.

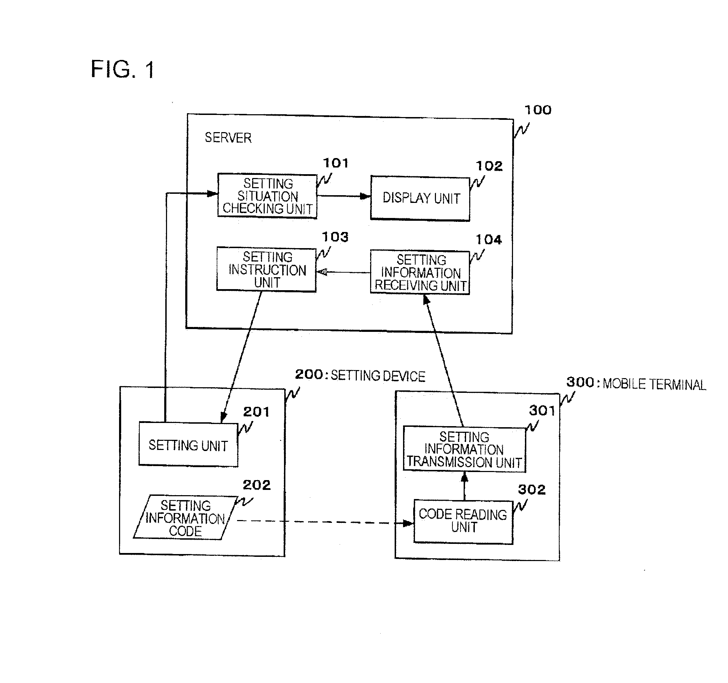

Referring to FIG. 1, the first embodiment has a server 100, a setting device 200, and a mobile terminal 300.

Each of the server 100, the setting device 200, and the mobile terminal 300 has a computer (central processing unit; processor; data processing unit) that operates according to the program control. Specifically, each of the server 100, the setting device 200, and the mobile terminal 300 has an arithmetic processing unit represented by a CPU (Central Processing Unit), a storage device in which a program (software) for controlling a computer is stored, and other hardware components. In addition, the server 100, the setting device 200, and the mobile terminal 300 are realized when the arithmetic processing unit reads a program from the storage device and controls each hardware according to the program.

In addition, the server 100 is connected to each of the setting device 200 and the mobile terminal 300 through a network. This network is a public network, such as the Internet or a mobile phone network, for example. However, the application range of the present embodiment is not limited to this. The server 100 may also be connected to each of the setting device 200 and the mobile terminal 300 through other networks or a dedicated line other than the Internet. In addition, the connection may be a wireless connection, or all or a part of the connection may be a cable connection.

In addition, although one server 100, one setting device 200, and one mobile terminal 300 are shown in FIG. 1, this is not intended to limit the application range of the present embodiment. In the present embodiment, a plurality of servers 100, a plurality of setting devices 200, and a plurality of mobile terminals 300 may be present.

The server 100 includes a setting situation checking unit 101, a display unit 102, a setting instruction unit 103, and a setting information receiving unit 104. Each of these units approximately operates in the following ways:

The setting information receiving unit 104 receives the setting information transmitted from the mobile terminal 300, and transmits the received setting information to the setting instruction unit 103. Here, the "setting information" is assumed to be information including at least the information for identifying a setting device that should be set. The setting information may include one piece of identification information of a setting device, or may include identification information of a plurality of setting devices.

The setting instruction unit 103 receives the setting information transmitted from the setting information receiving unit 104, and selects the setting device 200 which is the setting target on the basis of the received setting information. In addition, the setting instruction unit 103 transmits a setting instruction to the selected setting device 200 on the basis of the received setting information.

The setting situation checking unit 101 receives a setting situation transmitted from the setting device 200, and transmits the received setting situation to the display unit 102. Here, the "setting situation" indicates information that is detectable by the operation of the set device or information indicating the operation situation of the set device.

The display unit 102 receives the setting situation transmitted from the setting situation checking unit 101, and displays the received setting situation. In addition, although the server 100 itself may include the display unit 102 as shown in FIG. 1, the setting situation may be output to an external display device. In addition, the server 100 may display the setting situation on the display unit 102, and/or instead thereof, may output the setting situation, for example, by printing it on a paper medium.

The setting device 200 includes a setting unit 201 and a setting information code 202.

The setting unit 201 receives a setting instruction transmitted from the server 100, sets the setting device 200 according to the received setting instruction, and transmits the information set thereto to the server 100 as a setting situation.

The setting information code 202 is a code describing the setting information, which is information for setting the setting device 200.

The mobile terminal 300 includes a code reading unit 302 and a setting information transmission unit 301. Each of these units approximately operates in the following ways:

The code reading unit 302 reads the setting information code 202 attached to the setting device 200 by the mobile terminal 300. In addition, the code reading unit 302 converts the read setting information code 202 into setting information, and transmits the converted setting information to the setting information transmission unit 301.

The setting information transmission unit 301 receives the setting information transmitted from the code reading unit 302, and transmits the received setting information to the server 100. In addition, as described above, a plurality of servers 100 may be present in the present embodiment. Thus, when a plurality of servers 100 are present, the server 100 of the transmission destination may be designated in advance.

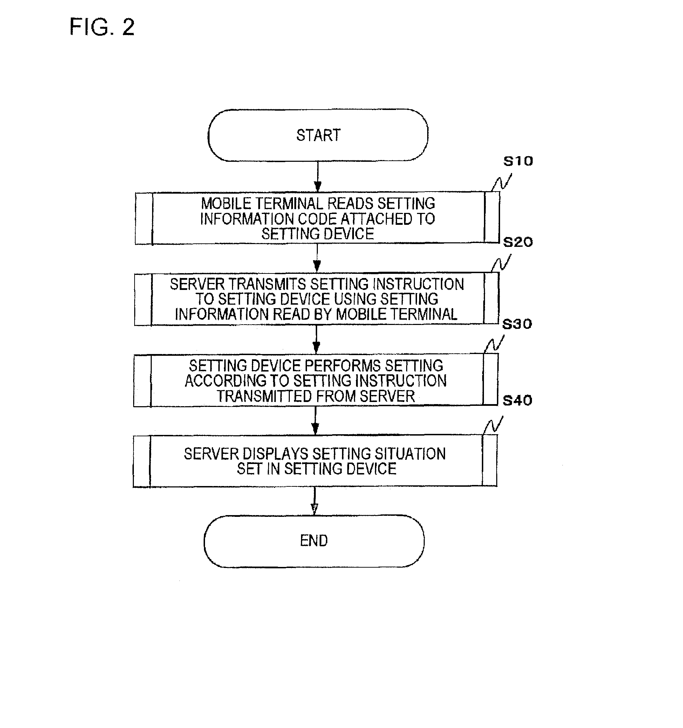

Next, the overall operation of the present embodiment will be described in detail with reference to the block diagram shown in FIG. 1 and flow charts shown in FIGS. 2 to 6.

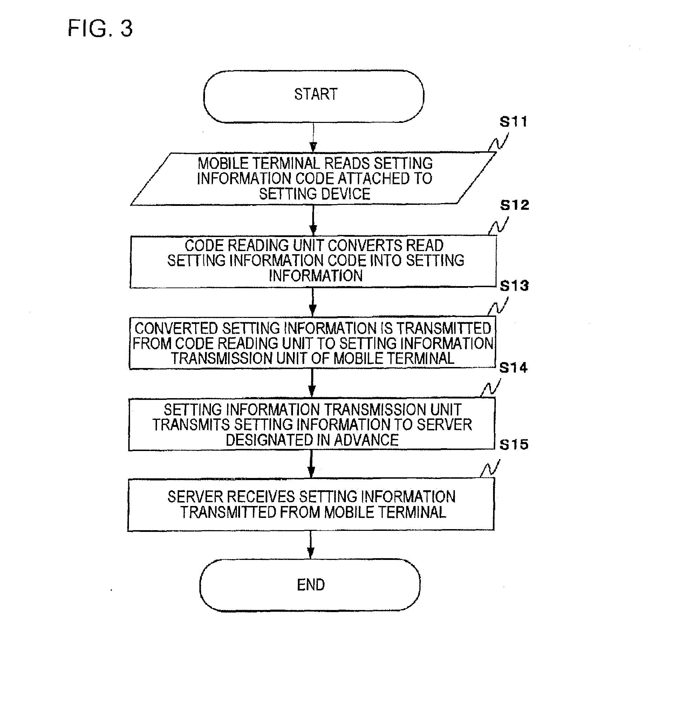

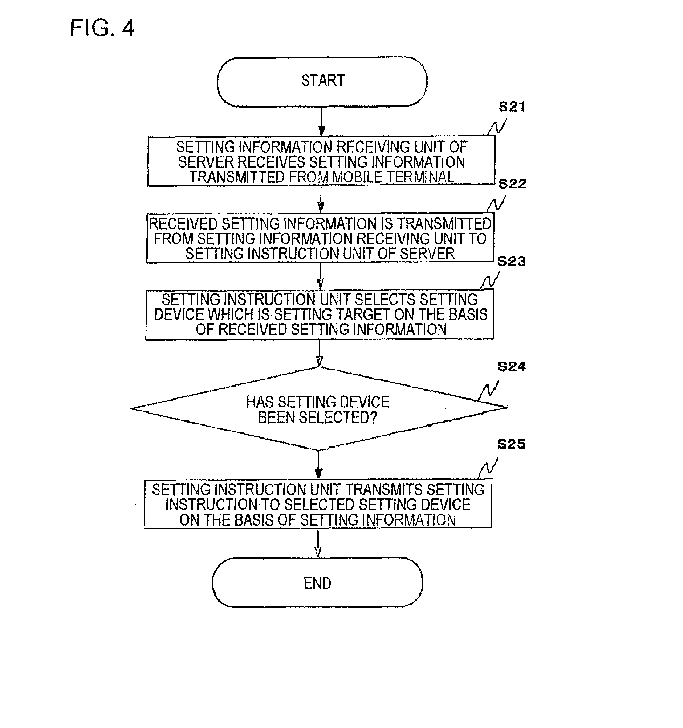

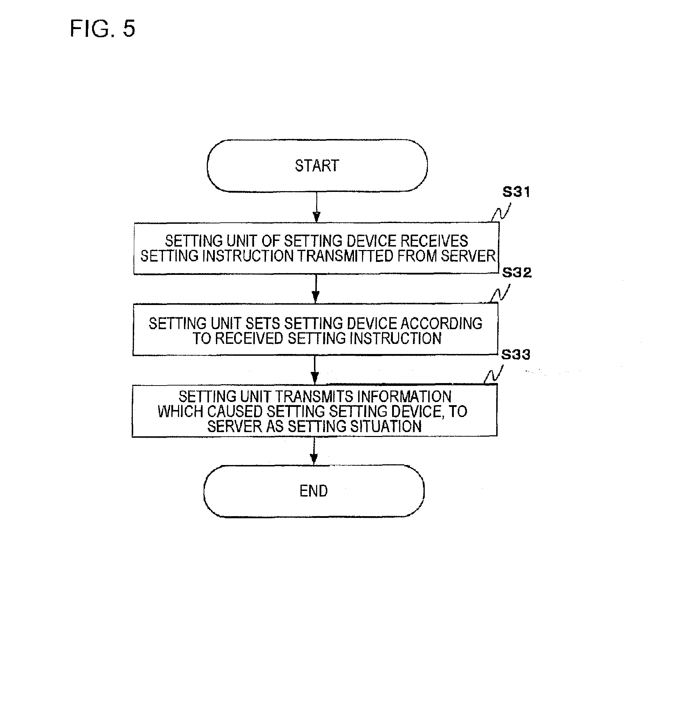

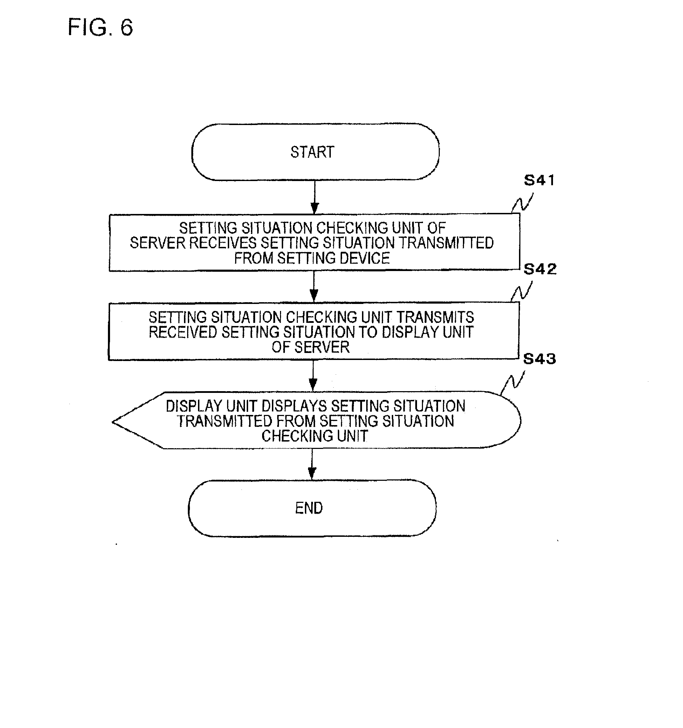

The flow chart shown in FIG. 2 shows the outline of the overall operation of the present embodiment. FIG. 3 is a diagram showing the details of step S10 in FIG. 2. FIG. 4 is a diagram showing the details of step S20 in FIG. 2, FIG. 5 is a diagram showing the details of step S30 in FIG. 2, and FIG. 6 is a diagram showing the details of step S40 in FIG. 2.

As shown in FIG. 2, first, the mobile terminal 300 reads the setting information code 202 attached to the setting device 200 (step S10 in FIG. 2).

Then, the server 100 transmits a setting instruction to the setting device 200 using the setting information read by the mobile terminal 300 (step S20).

Then, the setting device 200 performs a setting according to the setting instruction transmitted from the server 100 (step S30).

Finally, the server 100 displays a setting situation set thereto on the setting device 200 (step S40).

The above is the outline of the operation of the present embodiment.

Next, referring to FIG. 3, details of step S10 in FIG. 2 will be described by dividing step S10 in FIG. 2 into steps S11 to S15.

First, the code reading unit 302 of the mobile terminal 300 reads the setting information code 202 attached to the setting device 200 (step S11 in FIG. 3).

Then, the code reading unit 302 of the mobile terminal 300 converts the read setting information code 202 into setting information (step S12).

In addition, the converted setting information is transmitted from the code reading unit 302 to the setting information transmission unit 301 of the mobile terminal 300 (step S13).

In addition, the setting information transmission unit 301 transmits the setting information to the server 100 designated in advance (step S14).

Finally, the server 100 receives the setting information transmitted from the mobile terminal 300 (step S15).

Then, referring to FIG. 4, details of step S20 in FIG. 2 will be described by dividing step S20 in FIG. 2 into steps S21 to S25.

First, the setting information receiving unit 104 of the server 100 receives the setting information transmitted from the mobile terminal 300 (step S21 in FIG. 4).

Then, the received setting information is transmitted from the setting information receiving unit 104 to the setting instruction unit 103 of the server 100 (step S22).

In addition, the setting instruction unit 103 selects the setting device 200 which is the setting target on the basis of the received setting information (steps S23 and S24).

Finally, the setting instruction unit 103 transmits a setting instruction to the selected setting device 200 on the basis of the setting information (step S25).

In addition, referring to FIG. 5, details of step S30 in FIG. 2 will be described by dividing step S30 in FIG. 2 into steps S31 to S33.

First, the setting unit 201 of the setting device 200 receives the setting instruction transmitted from the server 100 (step S31 in FIG. 5).

Then, the setting unit 201 sets the setting device 200 according to the received setting instruction (step S32).

Finally, the setting unit 201 transmits the information which indicate that the setting unit 201 set the setting device 200, to the server 100 as a setting situation (step S33).

Next, referring to FIG. 6, details of step S40 in FIG. 2 will be described by dividing step S40 in FIG. 2 into steps S41 to S43.

First, the setting situation checking unit 101 of the server 100 receives the setting situation transmitted from the setting device 200 (step S41 in FIG. 6).

Then, the setting situation checking unit 101 transmits the received setting situation to the display unit 102 of the server 100 (step S42).

Finally, the display unit 102 displays the setting situation transmitted from the setting situation checking unit 101 (step S43).

Next, the effects of the present embodiment will be described. The embodiment of the present invention has many effects as described below.

In the present embodiment, the mobile terminal 300 reads the setting information code 202 attached to the setting device 200, the mobile terminal 300 transmits the setting information to the server 100 designated in advance, the server 100 transmits a setting instruction to the setting device 200 using the setting information read by the mobile terminal 300, and the setting device 200 performs a setting according to the setting instruction transmitted from the server 100. Accordingly, there is an effect that it is possible setting terminals or devices other than a terminal that has read a code.

In addition, in the present embodiment, the mobile terminal 300 reads the setting information code 202 attached to the setting device 200, the mobile terminal 300 transmits the setting information to the server 100 designated in advance, the setting instruction unit 103 of the server 100 selects the setting device 200 which is the setting target on the basis of the received setting information, the setting instruction unit 103 of the server 100 transmits a setting instruction to the setting device 200 selected on the basis of the setting information, and the setting device 200 performs a setting according to the setting instruction transmitted from the server 100. In addition, in the present embodiment, a plurality of setting devices 200 may be present as described above. In addition, the mobile terminal 300 can read the setting information code 202 from each of the plurality of setting devices 200. In addition, in the present embodiment, the setting instruction unit 103 can select the setting device 200 which is the setting target from the plurality of setting devices 200 on the basis of the setting information. Accordingly, there is an effect that a plurality of terminals or devices can be set by one terminal that reads a code.

In addition, as a problem of the typical setting system, there has been a problem in that a mobile terminal and a server can be set only as "accessible" or "inaccessible", but a plurality of settings, such as a company name or a terminal ID, cannot be performed and the situation of the setting result cannot be checked. This is because, in the typical setting system, only the authentication of a terminal that has read a code is performed and only a setting regarding the possibility of the access from the terminal that has read the code is performed according to the authentication result. In the present embodiment, however, the mobile terminal 300 reads the setting information code 202 attached to the setting device 200, the mobile terminal 300 transmits the setting information to the server 100 designated in advance, the server 100 gives a setting instruction to the setting device 200 using the setting information read by the mobile terminal 300, the setting device 200 performs a setting according to the setting instruction transmitted from the server 100, and the server 100 displays the setting situation set thereto on the setting device 200. Accordingly, since there is an effect that the setting situation of a set terminal and device can be checked by the server 100, the above-described problem can be solved.

Next, a second embodiment of the present invention will be described in detail with reference to the drawings.

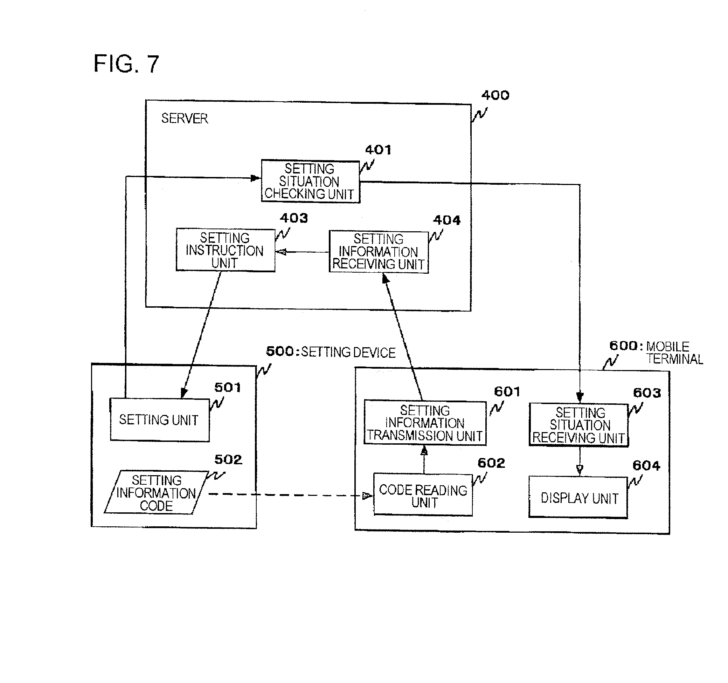

When FIG. 7 is referred to, the second embodiment has a server, a setting device, and a mobile terminal as in the first embodiment. Specifically, the second embodiment has a server 400, a setting device 500, and a mobile terminal 600. In addition, although one server 400, one setting device 500, and one mobile terminal 600 are shown in FIG. 7, this is not intended to limit the application range of the present embodiment. In the present embodiment, a plurality of servers 400, a plurality of setting devices 500, and a plurality of mobile terminals 600 may be present. In addition, in the following explanation, some explanations regarding the same portion as in the first embodiment will not be repeated, and the explanation will be focusing on the difference from the first embodiment.

The server 400 includes a setting information receiving unit 404, a setting instruction unit 403, and a setting situation checking unit 401. The setting information receiving unit 404 is a unit equivalent to the setting information receiving unit 104, and receives the setting information transmitted from the mobile terminal 600 and transmits the received setting information to the setting instruction unit 403.

In addition, the setting instruction unit 403 is a unit equivalent to the setting instruction unit 103, and receives the setting information transmitted from the setting information receiving unit 404 and selects the setting device 500 which is the setting target on the basis of the received setting information. In addition, the setting instruction unit 403 gives a setting instruction to the selected setting device 500 on the basis of the received setting information.

The setting situation checking unit 401 is a unit equivalent to the setting situation checking unit 101, but the transmission destination of the setting situation is different. Specifically, the setting situation checking unit 401 receives the setting situation transmitted from the setting device 500, and transmits the received setting situation to the mobile terminal 600.

In addition, in the server 400, a unit equivalent to the display unit 102 is not provided unlike as in the server 100.

The setting device 500 includes a setting unit 501 and a setting information code 502. The setting device 500 has the same configuration as the setting device 200.

The setting unit 501 is a unit equivalent to the setting unit 201, and receives a setting instruction transmitted from the server 400, sets the setting device 500 according to the received setting instruction, and transmits the set information to the server 400 as a setting situation.

The setting information code 502 is a code which is equivalent to the setting information code 202 and describes setting information that is information for setting the setting device 500.

The mobile terminal 600 includes a code reading unit 602, a setting information transmission unit 601, a setting situation receiving unit 603, and a display unit 604.

The code reading unit 602 is a unit equivalent to the code reading unit 302, and reads the setting information code 502 attached to the setting device 500 by the mobile terminal 600. In addition, the code reading unit 602 converts the read setting information code 502 into setting information, and transmits the converted setting information to the setting information transmission unit 601.

The setting information transmission unit 601 is a unit equivalent to the setting information transmission unit 301, and receives the setting information transmitted from the code reading unit 602 and transmits the received setting information to the server 400 designated in advance.

The setting situation receiving unit 603 and the display unit 604 are units that are not provided in the mobile terminal 300.

The setting situation receiving unit 603 receives the setting situation transmitted from the server 400, and transmits the received setting situation to the display unit 604.

The display unit 604 receives the setting situation transmitted from the setting situation receiving unit 603, and displays the received setting situation.

That is, the second embodiment is different from the first embodiment in that the display unit 604 is provided in the mobile terminal 600 and accordingly a setting situation in this mobile terminal 600 can be displayed.

Next, the overall operation of the present embodiment will be described in detail with reference to the block diagram shown in FIG. 7 and flow charts shown in FIGS. 3, 4, 5, 8, and 9.

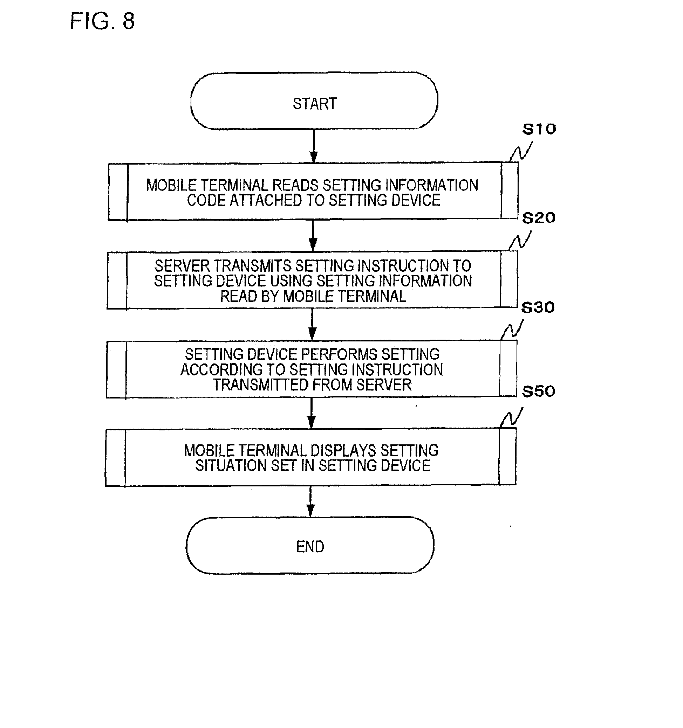

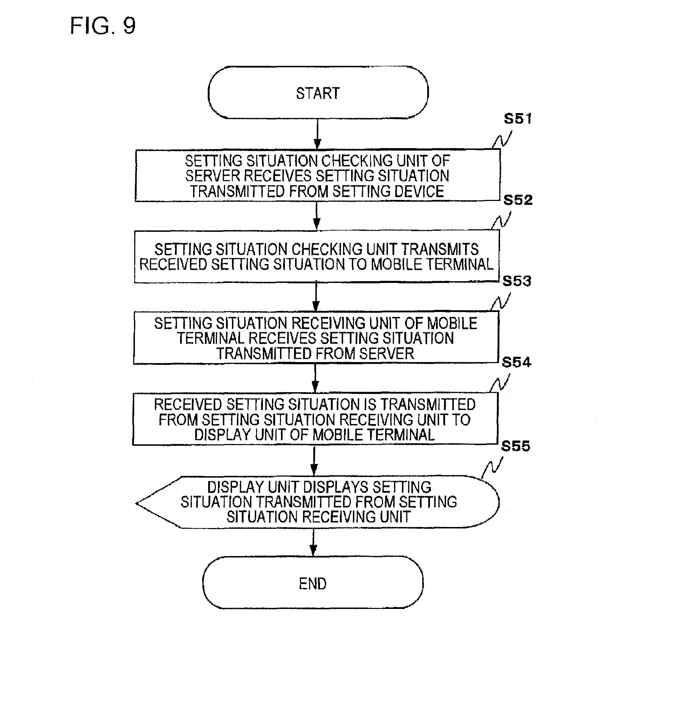

Here, the flow chart shown in FIG. 8 shows the outline of the overall operation of the present embodiment. The operation of steps S10, S20, and S30 in the present embodiment is the same operation as in FIG. 2. Accordingly, FIG. 3 is a diagram showing the details of step S10 in FIG. 8. Similarly, FIG. 4 is a diagram showing the details of step S20 in FIG. 8, and FIG. 5 is a diagram showing the details of step S30 in FIG. 8. In addition, in the present embodiment, the operation is performed in step S50 instead of step S40 in FIG. 2. FIG. 9 is a diagram showing the details of step S50 in FIG. 8.

As shown in FIG. 8, first, the mobile terminal 600 reads the setting information code 502 attached to the setting device 500 (step S10 in FIG. 8).

Then, the server 400 transmits a setting instruction to the setting device 500 using the setting information read by the mobile terminal 600 (step S20).

In addition, the setting device 500 performs a setting according to the setting instruction transmitted from the server 400 (step S30).

Finally, the mobile terminal 600 displays the setting situation set thereto on the setting device 500 (step S50).

Since the details of steps S10, S20, and S30 in FIG. 8 are the same as those of the first embodiment described above, the explanation will not be repeated.

Details of the last step S50 will be described by dividing it into steps S51 to S55.

As shown in FIG. 9, first, the setting situation checking unit 401 of the server 400 receives the setting situation transmitted from the setting device 500 (step S51 in FIG. 9).

Then, the setting situation checking unit 401 transmits the received setting situation to the mobile terminal 600 (step S52).

In addition, the setting situation receiving unit 603 of the mobile terminal 600 receives the setting situation transmitted from the server 400 (step S53).

Then, the received setting situation is transmitted from the setting situation receiving unit 603 to the display unit 604 of the mobile terminal 600 (step S54).

Finally, the display unit 604 displays the setting situation transmitted from the setting situation receiving unit 603 (step S55).

Next, the effects of the present embodiment will be described. The present embodiment has many effects as described below.

In the present embodiment, the mobile terminal 600 reads the setting information code 502 attached to the setting device 500, the mobile terminal 600 transmits the setting information to the server 400 designated in advance, the server 400 transmits a setting instruction to the setting device 500 using the setting information read by the mobile terminal 600, and the setting device 500 performs a setting according to the setting instruction transmitted from the server 400. Accordingly, there is an effect that it is possible setting terminals or devices other than a terminal that has read a code.

In addition, in the present embodiment, the mobile terminal 600 reads the setting information code 502 attached to the setting device 500, the mobile terminal 600 transmits the setting information to the server 400 designated in advance, the setting instruction unit 403 of the server 400 selects the setting device 500 which is the setting target on the basis of the received setting information, the setting instruction unit 403 of the server 400 transmits a setting instruction to the setting device 500 selected on the basis of the setting information, and the setting device 500 performs a setting according to the setting instruction transmitted from the server 400. In addition, in the present embodiment, a plurality of setting devices 500 may be present as described above. In addition, the mobile terminal 600 can read the setting information code 502 from each of the plurality of setting devices 500. In addition, in the present embodiment, the setting instruction unit 403 can select the setting device 500 as a target from the plurality of setting devices 500 on the basis of the setting information. Accordingly, there is an effect that a plurality of terminals or devices can be set by one terminal that reads a code.

In addition, as a problem of the typical setting system, there has been a problem in that a mobile terminal and a server can be set only as "accessible" or "inaccessible", but a plurality of settings, such as a company name or a terminal ID, cannot be performed and the situation of the setting result cannot be checked. This is because, in the typical setting system, only the authentication of a terminal that has read a code is performed and only a setting regarding the possibility of the access to the terminal that has read the code is performed according to the authentication result. In the present embodiment, however, the mobile terminal 600 reads the setting information code 502 attached to the setting device 500, the mobile terminal 600 transmits the setting information to the server 400 designated in advance, the server 400 gives a setting instruction to the setting device 500 using the setting information read by the mobile terminal 600, the setting device 500 performs a setting according to the setting instruction transmitted from the server 400, the information set thereto by the setting device 500 is transmitted to the server 400 as a setting situation, the server 400 transmits the setting situation to the mobile terminal 600, and the mobile terminal 600 displays the setting situation set thereto on the setting device 500. Accordingly, since there is an effect that the setting situation of a set terminal or device can be checked by the mobile terminal 600, the above-described problem can be solved.

In addition, in the second embodiment described above, the setting situation is checked through the display unit 604. In this regard, the server 400 of the second embodiment may have a display unit as in the first embodiment. In this case, the setting situation checking unit 401 also transmits the setting situation to the provided display unit, so that the setting situation is also displayed on the provided display unit. That is, it is possible to combine the first and second embodiments.

### [Examples]

Next, the operation of the embodiment will be described using specific examples.

### [First example]

First, a first example which is an example of the first embodiment will be described.

In this example, explanation will be given using an example where settings of devices of a plurality of personal area networks using a home gateway are performed (hereinafter, "personal area networks " may be referred to as "PAN"). That is, in this example, it is possible to perform a setting for each equipment unit rather than a setting of one entire building unit, for example.

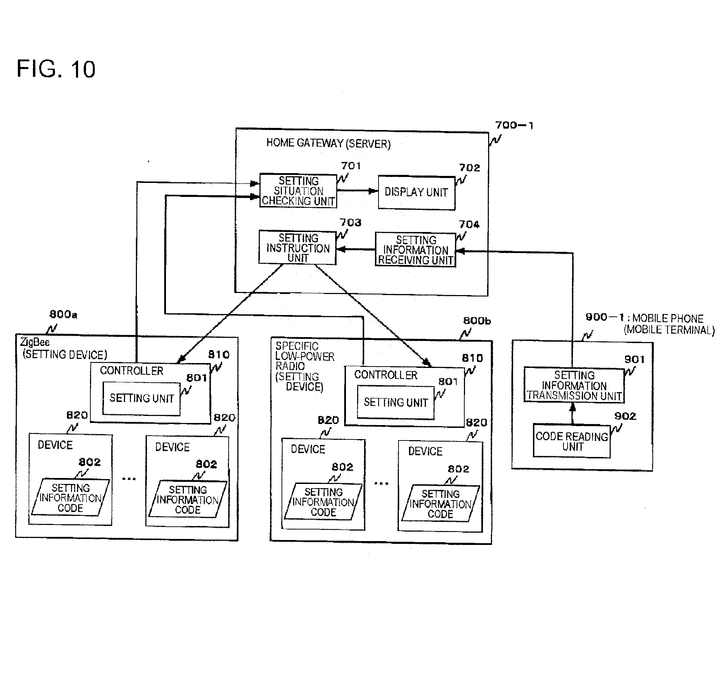

Referring to FIG. 10, this example has a home gateway 700-1 as a server, two PANs of a ZigBee 800a and a specific low-power radio 800b as setting devices, and a mobile phone 900-1 as a mobile terminal.

Each of the ZigBee 800a and the specific low-power radio 800b has one controller 810 and a plurality of devices 820, such as a temperature sensor or a fire alarm. In addition, the number of devices 820 is not particularly limited, and an arbitrary number of devices 820 may be present. In addition, it is assumed that a setting information code 802 obtained by coding the setting information is attached to each device 820.

It is assumed that the home gateway 700-1 and the PAN (the ZigBee 800a or the specific low-power radio 800b) are connected to each other through a network based on common standards, such as a USB (Universal Serial Bus), Ethernet (registered trademark), or WiFi (wireless fidelity). In addition, it is assumed that the home gateway 700-1 and the mobile phone 900-1 are connected to each other through a network based on the standards, such as WiFi, or a network, such as a 3G network.

The home gateway 700-1 includes a setting information receiving unit 704, a setting instruction unit 703, a setting situation checking unit 701, and a display unit 702.

The PAN (the ZigBee 800a or the specific low-power radio 800b) includes a setting unit 801, a setting information code 802, a controller 810, and a device 820.

The mobile terminal 900-1 includes a code reading unit 902 and a setting information transmission unit 901.

Each of these units approximately operates in the following ways:

The setting information receiving unit 704 is a unit equivalent to the setting information receiving unit 104, and receives the setting information transmitted from the mobile terminal 900-1 and transmits the received setting information to the setting instruction unit 703.

The setting instruction unit 703 is a unit equivalent to the setting instruction unit 103, and receives the setting information transmitted from the setting information receiving unit 704. In addition, the setting instruction unit 703 selects the PAN, which is the setting target, from the ZigBee 800a or the specific low-power radio 800b on the basis of the received setting information, and transmits a setting instruction to the controller 810 of the selected PAN (the ZigBee 800a or the specific low-power radio 800b) on the basis of the received setting information.

The setting situation checking unit 701 is a unit equivalent to the setting situation checking unit 101, and receives the setting situation transmitted from the PAN (the ZigBee 800a or the specific low-power radio 800b) and transmits the received setting situation to the display unit 702.

The display unit 702 is a unit equivalent to the display unit 102, and receives the setting situation transmitted from the setting situation checking unit 701 and displays the received setting situation.

The setting unit 801 is a unit equivalent to the setting unit 201, and receives the setting instruction transmitted from the home gateway 700-1, sets the PAN (the ZigBee 800a or the specific low-power radio 800b) according to the received setting instruction, and transmits the setting information to the home gateway 700-1 as a setting situation.

The setting information code 802 is a portion equivalent to the setting information code 202, and is a code such as a barcode or a QR Code (registered trademark) describing the setting information which is the information for setting the PAN (the ZigBee 800a or the specific low-power radio 800b) attached to the device 820.

The code reading unit 902 is a unit equivalent to the code reading unit 302, and reads the setting information code 802 attached to the device 820 of the PAN (the ZigBee 800a or the specific low-power radio 800b) by the mobile phone 900-1, converts the read setting information code 802 into setting information, and transmits the converted setting information to the setting information transmission unit 901.

The setting information transmission unit 901 is a unit equivalent to the setting information transmission unit 301, and receives the setting information transmitted from the code reading unit 902 and transmits the received setting information to the home gateway 700-1 designated in advance.

Subsequently, the operation in this example will be described with reference to the block diagram shown in FIG. 10 and the flow charts shown in FIGS. 2 to 6.

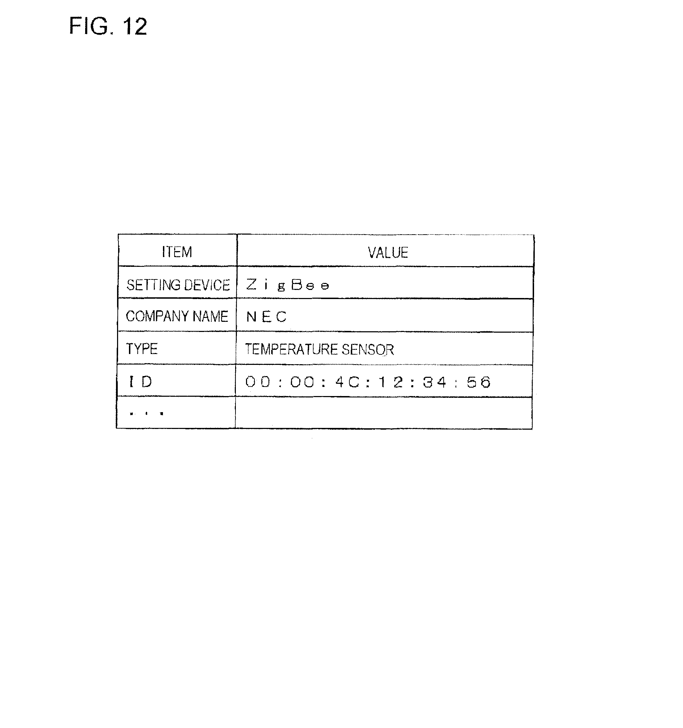

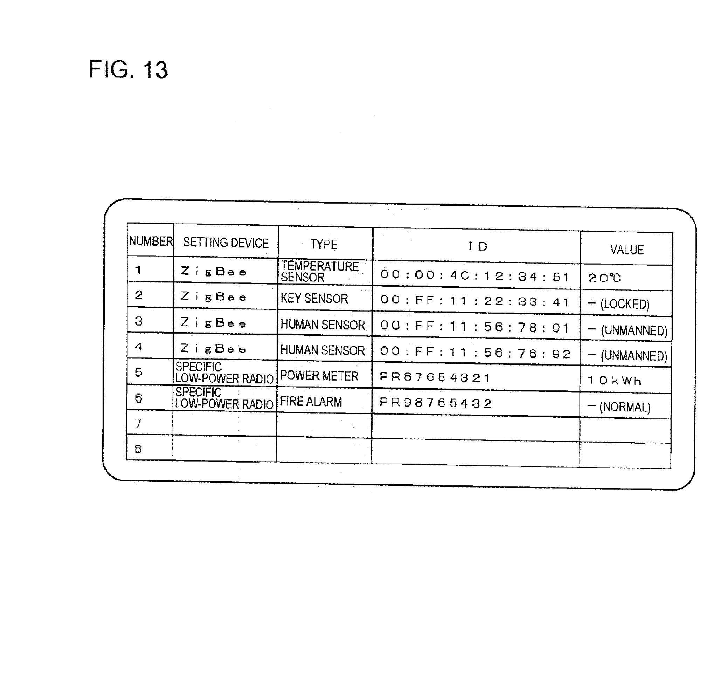

In addition, FIG. 12 shows an example of the setting information described in the setting information code 802 attached to the device 820. As described above in the first embodiment, the "setting information" is assumed to be information including at least the information for identifying a setting device that should be set. As a specific example, when "number 1" in FIG. 13 is referred to, information indicating that a device to be set is "ZigBee" is included. That is, it is possible to identify that the device to be set is the ZigBee 800a. In addition, in this case, the ZigBee 800a which is a setting device includes a plurality of devices 820 which are PANs. Accordingly, an ID "00:00:4C:12:34:51" for identifying which device is to be set is included, and information indicating that the device is a "temperature sensor" is included.

In addition, if this information is only used as setting information regarding a setting device which is a computer, it is not necessary to identify the setting device with a specific name understandable to the user, such as "ZigBee", and the setting device may be identified with a character string which does not make direct sense for the user, such as an identification number. In addition, the information indicating that the device is a "temperature sensor" is not necessarily required information. However, taking into consideration that the setting situation is presented to the user in addition to the setting information, it is desirable to use a specific name understandable to the user or include specific information, which indicates that the device is a "temperature sensor", in setting information and a setting situation.

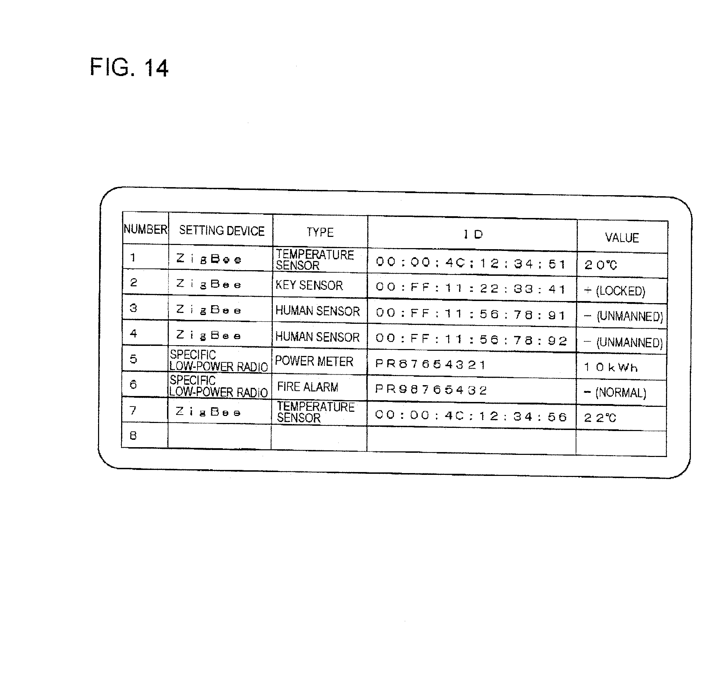

In addition, FIG. 13 shows an example of the setting situation displayed on the display unit 702 before a device is set. In addition, FIG. 14 shows an example of the setting situation displayed on the display unit 702 after a device is set. In this example, any value may be set as the "setting information", and there are various values to be set as a setting situation according to the device type. As can be seen with reference to FIGS. 13 and 14, for example, when a device is a certain detector or sensor, the detection result may be shown. For example, it is possible to show the temperature if the device is a temperature sensor, or it is possible to show the state whether it is locked or unlocked if the device is a key sensor, or is possible to show the presence or absence of an object considered to be a human being if it is a human sensor.

In this explanation, as shown in FIG. 13, it is assumed that four devices of ZigBee and two devices of specific low-power radios are already set in the home gateway 700-1. Therefore, an operation when a setting to add a temperature sensor, which is the device 820 of the ZigBee 800a shown in FIG. 12, is performed will be described in detail as an example.

First, the overall operation in this example will be described with reference to FIG. 2.

Referring to FIG. 2, first, the mobile phone 900-1 reads the setting information code 802 attached to the temperature sensor which is the device 820 of the ZigBee 800a (step S10 in FIG. 2).

Then, the home gateway 700-1 transmits a setting instruction to the controller 810 of the ZigBee 800a using the setting information read by the mobile phone 900-1 (step S20).

In addition, the controller 810 of the ZigBee 800a performs a setting to add a temperature sensor, which is the device 820 of the ZigBee 800a, according to the setting instruction transmitted from the home gateway 700-1 (step S30).

Finally, the home gateway 700-1 displays the setting situation set thereto on the ZigBee 800a or the specific low-power radio 800b (step S40).

Details of the first step S10 will be described with reference to FIG. 3.

First, the code reading unit 902 of the mobile phone 900-1 reads the setting information code 202 attached to the temperature sensor which is the device 820 of the ZigBee 800a (step S11 in FIG. 3). As a specific example of mounting, a QR Code is used as the setting information code 802, and a camera of a mobile phone is used as the code reading unit 902. In addition, the QR Code is attached to the temperature sensor, and the QR Code is read by the camera of the mobile phone.

Then, the code reading unit 902 of the mobile phone 900-1 converts the read setting information code 802 into setting information (step S12). As shown in FIG. 12, the QR Code which is the setting information code 802 is converted into setting information indicating that the setting device is ZigBee, the company name is NEC, the type is a temperature sensor, and the ID is "00:00:4C:12:34:56" and the like.

In addition, the converted setting information is transmitted from the code reading unit 902 to the setting information transmission unit 901 of the mobile phone 900-1 (step S13).

In addition, the setting information transmission unit 901 transmits the setting information to the home gateway 700-1 designated in advance (step S14).

Finally, the home gateway 700-1 receives the setting information transmitted from the mobile phone 900-1 (step S15).

Subsequently, details of the next step S20 will be described with reference to FIG. 4.

First, the setting information receiving unit 704 of the home gateway 700-1 receives the setting information transmitted from the mobile phone 900-1 (step S21 in FIG. 4).

Then, the received setting information is transmitted from the setting information receiving unit 704 to the setting instruction unit 703 of the home gateway 700-1 (step S22) .

In addition, the setting instruction unit 703 selects a setting device which is the setting target on the basis of the received setting information (steps S23 and S24). In this case, since the value of the setting device of the setting information is ZigBee as shown in FIG. 12, the ZigBee 800a is selected as a setting device.

Finally, the setting instruction unit 703 transmits a setting instruction to the ZigBee 800a selected on the basis of the setting information (step S25). On the basis of the setting information indicating that the company name is NEC, the type is a temperature sensor, and the ID is "00:00:4C:12:34:56" and the like, the setting instruction unit 703 transmits a setting instruction to the controller 810 of the ZigBee 800a so as to add a temperature sensor which is the device 820.

In addition, details of the next step S30 will be described with reference to FIG. 5.

First, the setting unit 801 of the controller 810 of the ZigBee 800a receives a setting instruction transmitted from the home gateway 700-1 (step S31 in FIG. 5).

Then, the setting unit 801 sets the controller 810 of the ZigBee 800a according to the setting instruction (step S32). A temperature sensor whose ID is "00:00:4C:12:34:56" is added to the ZigBee 800a.

Finally, the setting unit 801 transmits the information, by which the controller 810 of the ZigBee 800a is set, to the home gateway 700-1 as a setting situation (step S33). Information indicating that a temperature sensor whose ID is "00:00:4C:12:34:56" is added to the ZigBee 800a is transmitted to the home gateway 700-1.

Details of the last step S40 will be described with reference to FIG. 6.

First, the setting situation checking unit 701 of the home gateway 700-1 receives a setting situation transmitted from the controller 810 of the ZigBee 800a (step S41 in FIG. 6). Information indicating that a temperature sensor whose ID is "00:00:4C:12:34:56" is added to the ZigBee 800a is received as setting information.

Then, the setting situation checking unit 701 transmits the received setting situation to the display unit 702 of the home gateway 700-1 (step S42).

Finally, the display unit 702 displays the setting situation transmitted from the setting situation checking unit 701 (step S43) . As shown in FIG. 14, a setting situation showing that the setting device is ZigBee, the type is a temperature sensor, and ID thereof is "00:00:4C:12:34:56" is added, is displayed as the number 7. Specifically, since a setting of the temperature sensor of the number 7 has been performed, the temperature sensor value indicating 22 °C is displayed on the display unit 702 of the home gateway 700-1 as a setting situation. Then, the operation in the first example ends.

### [Second example]

Next, a second example which is an example of the second embodiment will be described.

Also in this example, an example will be described in which setting of devices of a plurality of PANs are performed using a home gateway like as the first example. That is, also in this example, it is possible to perform a setting for each equipment unit rather than a setting of one entire building unit, for example.

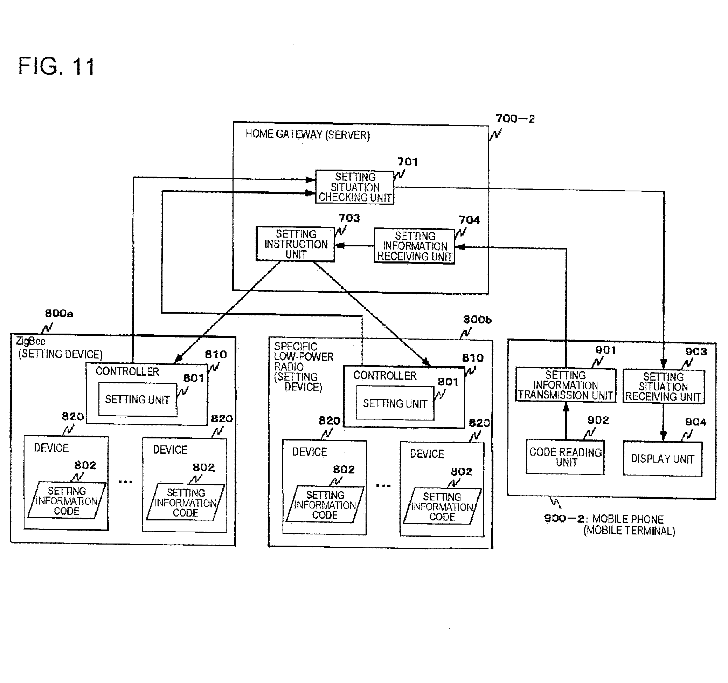

Referring to FIG. 11, this example has a home gateway 700-2 as a server, two PANs of a ZigBee 800a and a specific low-power radio 800b as setting devices, and a mobile phone 900-2 as a mobile terminal. Each of the ZigBee 800a and the specific low-power radio 800b has one controller 810 and a plurality of devices 820, such as a temperature sensor or a fire alarm. In addition, the number of devices 820 is not particularly limited, and an arbitrary number of devices 820 may be present. In addition, it is assumed that a setting information code 802 obtainable by coding the setting information is attached to each device 820.

It is assumed that the home gateway 700-2 and the PAN (the ZigBee 800a or the specific low-power radio 800b) are connected to each other through a network based on common standards, such as a USB, Ethernet, or WiFi. In addition, it is assumed that the home gateway 700-2 and the mobile phone 900-2 are connected to each other through a network based on common standards, such as WiFi, or a network, such as a 3G network.

The home gateway 700-2 includes the setting information receiving unit 704, the setting instruction unit 703, and the setting situation checking unit 701.

The PAN (the ZigBee 800a or the specific low-power radio 800b) includes a setting unit 801, a setting information code 802, a controller 810, and a device 820.

The mobile terminal 900-2 includes a code reading unit 902 and a setting information transmission unit 901. The mobile phone 900-2 further includes a display unit 904 and a setting situation receiving unit 903.

This example is different from the first example in that the mobile phone 900-2 has the display unit 904 and the setting situation receiving unit 903. In addition, this example is also different from the first example in that the home gateway 700-2 does not have a display unit and the setting situation checking unit 701 communicates with the setting situation receiving unit 903.

Each of these units approximately operates in the following ways:

The setting situation checking unit 701 is equivalent to the setting situation checking unit 401, and receives the setting situation transmitted from the PAN (the ZigBee 800a or the specific low-power radio 800b) and transmits the received setting situation to the setting situation receiving unit 903 of the mobile terminal 900-2.

The setting situation receiving unit 903 is equivalent to the setting situation receiving unit 603, and receives the setting situation transmitted from the home gateway 700-2 and transmits the received setting situation to the display unit 904.

The display unit 904 is equivalent to the display unit 604, and receives the setting situation transmitted from the setting situation receiving unit 903 and displays the received setting situation.

Subsequently, the operation in this example will be described with reference to the block diagram shown in FIG. 11 and the flow charts shown in FIGS. 2, 8, and 9.

FIG. 12 shows an example of the setting information described in the setting information code 802 attached to the device 820. In addition, FIG. 13 shows an example of the setting situation displayed on the display unit 702 before a device is set. In addition, FIG. 14 shows an example of the setting situation displayed on the display unit 702 after a device is set.

In this explanation, as shown in FIG. 13, it is assumed that four devices of ZigBee and two devices of specific low-power radios are already set in the home gateway 700-2. Therefore, an operation when a setting to add a temperature sensor, which is the device 820 of the ZigBee 800a shown in FIG. 12, is performed will be described in detail as an example.

First, the overall operation in this example will be described with reference to FIG. 8.

Referring to FIG. 8, first, the mobile phone 900-2 reads the setting information code 802 attached to the temperature sensor which is the device 820 of the ZigBee 800a (step S10 in FIG. 8).

Then, the home gateway 700-2 transmits a setting instruction to the controller 810 of the ZigBee 800a using the setting information read by the mobile phone 900-2 (step S20) .

In addition, the controller of the ZigBee 800a performs a setting to add a temperature sensor, which is the device 820 of the ZigBee 800a, according to the setting instruction transmitted from the home gateway 700-2 (step S30).

Finally, the mobile phone 900-2 displays the setting situation set in the ZigBee 800a or the specific low-power radio 800b (step S50).

Since the details of steps 310, S20, and S30 in FIG. 8 are the same as those of the first example described above, the explanation will not be repeated.

Details of the last step S50 will be described.

Referring to FIG. 9, first, the setting situation checking unit 701 of the home gateway 700-2 receives a setting situation transmitted from the controller 810 of the ZigBee 800a (step S51 in FIG. 9). That is, information indicating that a temperature sensor whose ID is "00:00:4C:12:34:56" is added to the ZigBee 800a is received as setting information.

Then, the setting situation checking unit 701 transmits the received setting situation to the setting situation receiving unit 903 of the mobile terminal 900-2 (step S52) .

In addition, the setting situation receiving unit 903 of the mobile phone 900-2 receives the setting situation transmitted from the home gateway 700-2 (step S53).

Then, the received setting situation is transmitted from the setting situation receiving unit 903 to the display unit 904 of the mobile phone 900-2 (step S54).

Finally, the display unit 904 displays the setting situation transmitted from the setting situation receiving unit 903 (step S55) . As shown in FIG. 14, a setting situation showing that the setting device is ZigBee, the type is a temperature sensor, and ID thereof is "00:00:4C:12:34:56" is added is displayed in the number 7. Since a setting of the temperature sensor of the number 7 has been performed, the temperature sensor value indicating 22°C is displayed on the display unit 904 of the mobile phone 900-2 as a setting situation. Then, the operation in the second example ends.

In addition, similar to the first example, in this example, any value may be set as the setting information, and there are various values to be set as a setting situation according to the device type.

### [Third example]

Next, a third example will be described. The third example is a modification of the first or second example described above. That is, the third example is also an example of the first embodiment, and is also an example of the second embodiment.

The present example is a modification regarding a setting device. The ZigBee 800a will be described as an example. In addition, when a plurality of setting devices are present, all the setting devices may be changed as in this example, or some setting devices may be changed as in this example.

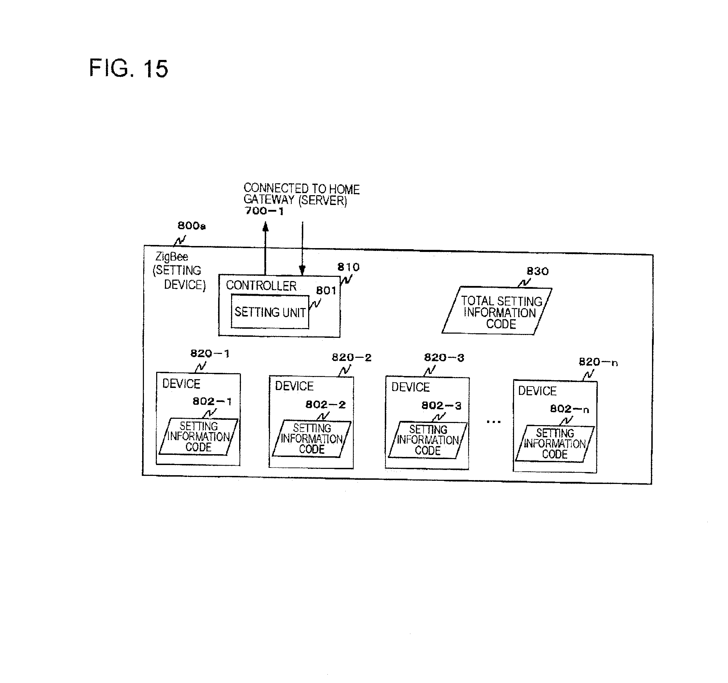

Referring to FIG. 15, the ZigBee 800a has one controller 810 and a plurality of devices 820 as in the first and second examples. For the convenience of explanation, four devices 820 (devices 820-1, 820-2, 820-3, and 820-n) are shown in the drawings. In addition, the number of devices 820 is not particularly limited, and an arbitrary number of devices 820 may be present. In addition, similar to the first and second examples, it is assumed that each setting information code 802 (a setting information code 802-1, a setting information code 802-2, a setting information code 802-3, and a setting information code 802-n) obtained by coding the setting information is attached to each device 820.

In addition, in this example, a total setting information code 830 is attached unlike the first and second examples. The total setting information code 830 is obtained by coding setting information including all items of the setting information of each device managed by the ZigBee 800a described above. For example, when three devices are being managed by the ZigBee 800a (devices 820-1, 820-2, and 820-3), the total setting information code 830 is obtained by coding setting information including the setting information of the device 820-1, the setting information of the device 820-2, and the setting information of the device 820-3.

In addition, although this example has been described in the conditions where the setting information code 802 is attached to each device 820, the setting information code 802 may not be attached to each device 820. That is, the setting information code 802 may not be present, and only the total setting information code 830 may be present.

Subsequently, the operation in this example using the total setting information code 830 will be described using a specific example.

In this example, a mobile terminal reads a setting information code as in the first and second examples (step S11). In this example, information read herein is the total setting information code 830. In this manner, this example has effects as described below.

In the first and second example, the setting information code 802 is attached to each device. Therefore, for example, when three devices 820 need to be set, it is necessary to read the setting information 802 one by one from three places, 3 times in total.

In contrast, in this example, when a setting device manages the devices 820-1, 820-2, and 820-3, there is such an advantageous effect that only once of the reading of setting information is required if the total setting information code 830 describing all the items of the setting information of the devices 820-1, 820-2, and 820-3 is given to the setting device. That is, it is possible to set a plurality of terminals by one reading using one mobile terminal.

In addition, a case is considered in which a device 820-n is newly added after three devices (devices 820-1, 820-2, and 820-3) are set.

In this case, information of the device 820-n is added to the total setting information code 830 of the setting device 800a. In this manner, there is an effect that it can be found out the facts that the information of three devices (devices 820-1, 820-2, and 820-3) has already been set and a device to be newly set is the device 820-n, in view of the setting information stored in a server and the setting information which is obtainable by converting the total setting information code 830 read in the previous process.

In addition, although the setting system which is an embodiment of the present invention may be realized by hardware, the setting system may also be realized by making a computer read a program, which causes the computer to function as a certain device included in the setting system, from a computer-readable recording medium and execute the program.

In addition, although a setting method according to the embodiment of the present invention may be realized by hardware, the setting method may also be realized by making a computer read a program, which causes the computer to execute the method, from a computer-readable recording medium and execute the program.

In addition, while the embodiments described above are preferred embodiments of the present invention, the range of the present invention is not limited to only the embodiments described above, and various changes may be made without departing from the scope of the present invention.

In addition, although a program for executing the above-described process is described to be stored in a storage device in advance in the embodiments described above, the program for executing the above-described process may be stored in computer-readable recording media, such as a flexible disk, a CD-ROM (Compact Disc Read-Only Memory), a DVD (Digital Versatile Disc), an MO (Magneto Optical Disk (Disc)), and a BD (Blu-ray Disc) and distributed. Then, the computer may be execute the above-described process and operate as each unit above-mentioned by the installing and execution of the program stored therein.

In addition, it is also possible to store the program in a disk unit of a server device on the Internet, download the program to a computer, for example, by superimposing the program on a carrier, and execute the program.

Although some or all of the embodiments described above may be described as the following notes, the present invention is not limited to this.

(Note 1) A setting system that performs a setting of a setting device and that includes: a setting device to be set; a terminal device; and a server connected to each of the setting device and the terminal device, where the terminal device includes a reading unit that acquires setting information, which is information for setting the setting device, by reading the setting information from the setting device and a setting information transmission unit that transmits the acquired setting information to the server, the server includes a setting information receiving unit that receives the setting information transmitted from the setting information transmission unit and a setting instruction unit that selects the setting device to be set on the basis of the setting information and transmits a setting execution instruction to the selected setting device, and the setting device includes a setting unit that performs a setting of itself according to the instruction of the setting instruction unit.

(Note 2) The setting system described in Note 1 in which the setting unit transmits information indicating a situation after the setting, as a setting situation, to the server after performing the setting and the server further includes a display unit that presents information to a user and a setting situation checking unit that receives the setting situation and displays the received setting situation on the display unit.

(Note 3) The setting system described in Note 1 in which the setting unit transmits information indicating a situation after the setting, as a setting situation, to the server after performing the setting, the server further includes a setting situation checking unit that receives the setting situation and transmits the received setting situation to the terminal device, and the terminal device further includes a display unit that presents information to a user and a setting situation receiving unit that receives the setting situation transmitted from the setting situation checking unit and displays the received setting situation on the display unit.

(Note 4) The setting system described in any one of Notes 1 to 3 in which the setting device has at least one or more subordinate devices to be set and the setting unit performs a setting of the corresponding subordinate device according to the instruction of the setting instruction unit.

(Note 5) The setting system described in any one of Notes 1 to 4 in which the reading unit reads a setting information code, which is a code describing the setting information, from the setting device, and acquires the setting information by converting the read setting information code into the setting information.

(Note 6) The setting system described in any one of Notes 1 to 5 in which the setting system has at least one or more servers as the servers and the setting information transmission unit transmits the setting information to a server, which is designated in advance as a transmission destination, of at least the one or more servers.

(Note 7) A server that is connected to each of a setting device to be set and a terminal device and that includes: a setting information receiving unit that receives setting information, which is read from the setting device by the terminal device and is information for setting the setting device; a setting instruction unit that selects the setting device to be set on the basis of the setting information and transmits a setting execution instruction to the selected setting device; a display unit that presents information to a user; and a setting situation checking unit that receives information indicating a situation after the setting, as a setting situation, from the setting device, which has performed a setting according to the instruction, and displays the received setting situation on the display unit.

(Note 8) A terminal device that is connected to a server connected to a setting device to be set and that includes: a reading unit that acquires setting information, which is information for setting the setting device, by reading the setting information from the setting device; a setting information transmission unit that transmits the acquired setting information to the server; a display unit that presents information to a user; and a setting situation receiving unit that receives, from the server, information indicating a situation after the setting of the setting device that has performed a setting according to a setting instruction executed by the server on the basis of the setting information, as a setting situation and displays the received setting situation on the display unit.

(Note 9) The terminal device described in Note 8 in which the reading unit reads a setting information code, which is a code describing the setting information, from the setting device, and acquires the setting information by converting the read setting information code into the setting information.

(Note 10) A setting method of a setting device that is performed by a system including a setting device to be set, a terminal device, and a server connected to each of the setting device and the terminal device and that includes: a reading step in which the terminal device acquires setting information, which is information for setting the setting device, by reading the setting information from the setting device; a setting information transmission step in which the terminal device transmits the read setting information to the server; a setting information receiving step in which the server receives the setting information transmitted from the terminal device in the setting information transmission step; a setting instruction step in which the server selects the setting device to be set on the basis of the setting information and transmits a setting execution instruction to the selected setting device; and a setting step in which the setting device performs a setting of itself according to the instruction in the setting instruction step.

(Note 11) The setting method described in Note 10 in which information indicating a situation after the setting is transmitted to the server as a setting situation after performing the setting in the setting step and the server further includes a step of preparing a display unit that presents information to a user and a setting situation checking step of receiving the setting situation and displaying the received setting situation on the display unit.

(Note 12) The setting method described in Note 10 in which information indicating a situation after the setting is transmitted to the server as a setting situation after performing the setting in the setting step, the server further includes a setting situation checking step of receiving the setting situation and transmitting the received setting situation to the terminal device, and the terminal device further includes a step of preparing a display unit that presents information to a user and a setting situation receiving step of receiving the setting situation transmitted by execution of the setting situation checking step and displaying the received setting situation on the display unit.

(Note 13) The setting method described in any one of Notes 10 to 12 in which the setting device has at least one or more subordinate devices to be set and in the setting step, a setting of the corresponding subordinate device is performed according to the instruction in the setting instruction step.

(Note 14) The setting method described in any one of Notes 10 to 13 in which a setting information code, which is a code describing the setting information, is read from the setting device in the reading step and the setting information is acquired by converting the read setting information code into the setting information.

(Note 15) The setting method described in any one of Notes 10 to 14 in which the setting system has at least one or more servers and in the setting information transmission step, the setting information is transmitted to the server which is designated in advance as a transmission destination of at least the one or more servers.

(Note 16) A setting program for a setting device that is installed in a server connected to each of the setting devices to be set and a terminal device and that causes a computer to function as a server including: a setting information receiving unit that receives setting information, which is read from the setting device by the terminal device and is information for setting the setting device from the terminal device; a setting instruction unit that selects the setting device to be set on the basis of the setting information and transmits a setting execution instruction to the selected setting device; a display unit that presents information to a user; and a setting situation checking unit that receives information, as a setting situation, indicating a situation after the setting from the setting device, which has performed a setting according to the instruction, and displays the received setting situation on the display unit.

(Note 17) A setting program for a setting device to be set that is installed in a terminal device connected to a server connected to the setting device and that causes a computer to function as a terminal device including: a reading unit that acquires setting information, which is information for setting the setting device, by reading from the setting device; a setting information transmission unit that transmits the acquired setting information to the server; a display unit that presents information to a user; and a setting situation receiving unit that receives information indicating a situation after the setting of the setting device that has performed a setting according to a setting instruction transmitted from the server on the basis of the setting information, as a setting situation, from the server, and displays the received setting situation on the display unit.

(Note 18) The setting program described in Note 17 in which the reading unit reads a setting information code, which is a code describing the setting information, from the setting device and acquires the setting information by converting the read setting information code into the setting information.

The present invention is suitable for applications, such as a setting of a gateway device, a router that realizes a home ICT service and the like, for example.

In addition, the present invention is also suitable for applications, such as a setting of a building management system, such as a security system and a BEMS.

In addition, the present invention is also suitable for applications, such as a setting of a remote maintenance system for a refrigerator, a Femto base station and the like.

Priority is claimed on Japanese Patent Application No. 2010-236461, filed October 21, 2010, the content of which is incorporated herein by reference.

## Claims

1. A setting system that performs a setting of a setting device, comprising:
a setting device to be set;
a terminal device; and
a server connected to each of the setting device and the terminal device,
wherein the terminal device includes a reading unit that acquires setting information, which is information for setting the setting device, by reading from the setting device and a setting information transmission unit that transmits the acquired setting information to the server,
the server includes a setting information receiving unit that receives the setting information transmitted from the setting information transmission unit and a setting instruction unit that selects the setting device to be set on the basis of the setting information and transmits a setting execution instruction to the selected setting device, and
the setting device includes a setting unit that performs a setting of itself according to the instruction of the setting instruction unit.

2. The setting system according to claim 1,
wherein after performing the setting, the setting unit transmits information indicating a situation after the setting, as a setting situation, to the server, and
the server further includes a display unit that presents information to a user and a setting situation checking unit that receives the setting situation and displays the received setting situation at the display unit.

3. The setting system according to claim 1,
wherein after performing the setting, the setting unit transmits information indicating a situation after the setting, as a setting situation, to the server,
the server further includes a setting situation checking unit that receives the setting situation and transmits the received setting situation to the terminal device, and
the terminal device further includes a display unit that presents information to a user and a setting situation receiving unit that receives the setting situation transmitted from the setting situation checking unit and displays the received setting situation at the display unit.

4. The setting system according to any one of claims 1 to 3,
wherein the setting device has at least one or more subordinate devices to be set, and
the setting unit performs a setting of the corresponding subordinate device according to the instruction of the setting instruction unit.

5. The setting system according to any one of claims 1 to 4,
wherein the reading unit reads a setting information code, which is a code describing the setting information, from the setting device, and acquires the setting information by converting the read setting information code into the setting information.

6. The setting system according to any one of claims 1 to 5,
wherein the setting system has at least one or more servers as the servers, and
the setting information transmission unit transmits the setting information to a server, which is designated in advance as a transmission destination, of at least the one or more servers.

7. A server connected to each of a setting device to be set and a terminal device, comprising:
a setting information receiving unit that receives setting information, which is read from the setting device by the terminal device and is information for setting the setting device;
a setting instruction unit that selects the setting device to be set on the basis of the setting information and transmits a setting execution instruction to the selected setting device;
a display unit that presents information to a user; and
a setting situation checking unit that receives information indicating a situation after the setting, as a setting situation, from the setting device, which has performed a setting according to the instruction, and displays the received setting situation at the display unit.

8. A terminal device connected to a server connected to a setting device to be set, comprising:
a reading unit that acquires setting information, which is information for setting the setting device, by reading from the setting device;
a setting information transmission unit that transmits the acquired setting information to the server;
a display unit that presents information to a user; and
a setting situation receiving unit that receives information indicating a situation after the setting of the setting device that has performed a setting according to a setting instruction transmitted from the server on the basis of the setting information, as a setting situation, from the server, and displays the received setting situation at the display unit.

9. A setting method of a setting device performed by a system including a setting device to be set, a terminal device, and a server connected to each of the setting device and the terminal device, comprising:
a reading step in which the terminal device acquires setting information, which is information for setting the setting device, by reading from the setting device;
a setting information transmission step in which the terminal device transmits the read setting information to the server;
a setting information receiving step in which the server receives the setting information transmitted from the terminal device in the setting information transmission step;
a setting instruction step in which the server selects the setting device to be set on the basis of the setting information and transmits a setting execution instruction to the selected setting device; and
a setting step in which the setting device performs a setting of itself according to the instruction in the setting instruction step.

10. A setting program for a setting device installed in a server connected to each of the setting device to be set and a terminal device, the program causing a computer to function as a server,
wherein the server includes:
a setting information receiving unit that receives setting information, which is read from the setting device by the terminal device and is information for setting the
setting device, from the terminal device;
a setting instruction unit that selects the setting device to be set on the basis of the setting information and transmits a setting execution instruction to the selected setting device;
a display unit that presents information to a user; and a setting situation checking unit that receives information, as a setting situation, indicating a situation after the setting from the setting device, which has performed a setting according to the instruction, and displays the received setting situation at the display unit.
